# EUROPÄISCHE PATENTSCHRIFT

(11) **EP 1 552 199 B1**
(45) Veröffentlichungstag und Bekanntmachung des Hinweises auf die Patenterteilung: **22.12.2010**
(21) Anmeldenummer: 03748073.8
(22) Anmeldetag: 22.09.2003
(51) Int. Cl.: F16K 31/08, F23N 1/00

(54) **GASHAHN MIT EINEM ELEKTROMAGNETISCHEN SICHERHEITSVENTIL**
GAS TAP COMPRISING AN ELECTROMAGNETIC SAFETY VALVE
ROBINET DE GAZ AVEC UNE VANNE DE SECURITE ELECTROMAGNETIQUE

(30) Priorität: 25.09.2002 EP 02021405
(43) Veröffentlichungstag der Anmeldung: 13.07.2005
(73) Patentinhaber: BSH Bosch und Siemens Hausgeräte GmbH, 81739 München (DE)
(72) Erfinder: HÄDICKE, Joachim, 76530 Baden-Baden (DE); OBERHOMBURG, Martin, 58300 Wetter (DE); VIOLAIN, Gildas, 67530 Ottorott (FR)
(86) Internationale Anmeldenummer: PCT/EP2003/010530
(87) Internationale Veröffentlichungsnummer: WO 2004/031632

(56) Entgegenhaltungen:
- WO-A-02/068850
- DE-A- 3 939 537
- DE-A- 4 334 350
- FR-A- 2 544 834
- PATENT ABSTRACTS OF JAPAN vol. 007, no. 165 (M-230), 20. Juli 1983 (1983-07-20) & JP 58 072784 A (MATSUSHITA DENKI SANGYO KK;OTHERS: 01), 30. April 1983 (1983-04-30)

## Beschreibung

Die vorliegende Erfindung betrifft einen Gashahn mit einem elektromagnetischen Sicherheitsventil. Zum Schließen eines im Gashahn vorgesehenen Gasweges drückt der Magnetanker das Ventilverschlusselement auf einen im Gashahn vorgesehenen Ventilsitz. Beim Anlegen einer Spannung an die Elektromagnetspule wird der Magnetanker betätigt.

Aus DE 1 959 057 ist ein Magneteinsatz insbesondere für Überwachungsvorrichtungen an gasbeheizten Geräten bekannt. Der Magneteinsatz weist einen an einer Tragplatte gehaltenen Elektromagrieten und eine Ankerplatte auf, welche mit einem Ventilstößel verbunden ist. Der Ventilstößel ist in einer den Elektromagneten und die Ankerplatte umschließenden Schutzkapsel verschiebbar gelagert. An dem zur Ankerplatte entgegengesetzten Ende des Ventilstößels ist das Schließglied eines Absperrventils angebracht. Vergleichbare Magneteinsätze sind auch aus EP 1 036 987 und aus EP 1 063 474 bekannt. Ein elektromagnetisches Sicherheitsventil ist aus DE 39 39 537 bekannt.

Die Aufgabe der vorliegenden Erfindung besteht darin, einen Gashahn mit einem elektromagnetischen Sicherheitsventil bereitzustellen, dessen Lebensdauer verlängert ist.

Die Aufgabe der Erfindung ist durch einen Gashahn mit den Merkmalen des Patentanspruches 1 gelöst. Gemäß Patentanspruch 1 ist die Elektromagnetspule als ein separates Bauteil außerhalb des Ankergehäuses des Magneteinsatzes angeordnet. Durch die externe Anordnung der Elektromagnetspule werden mechanische Stoßbelastungen vom Magnetanker im Ankergehäuse nicht mehr unmittelbar auf die Elektromagnetspule übertragen. Derartige mechanische Stoßbelastungen verursachen bei bekannten Magneteinsätzen mit innerhalb des Ankergehäuses angeordneten Elektromagnetspulen, dass bereits nach etwa 40.000 Schaltzyklen elektrische Anschlüsse der Elektromagnetspule reißen. Erfindungsgemäß kann die Anzahl von Schaltzyklen des Magneteinsatzes deutlich erhöht werden.

Gemäß einer besonders vorteilhaften Ausführungsform kann die Elektromagnetspule einfach demontierbar am Magneteinsatz und/oder gasdicht vom Gasweg im Gashahn getrennt angeordnet sein. Die Elektromagnetspule ist daher problemlos als ein Verschleißteil auswechselbar, ohne dass Gasdichtflächen zwischen dem Magneteinsatz und dem Gashahn beeinträchtigt werden.

Bevorzugt ist es, wenn die Elektromagnetspule bei im Gashahn eingesetztem Magneteinsatz außerhalb des Gashahns angeordnet ist. So lässt sich die Elektromagnetspule auswechseln, ohne den Magneteinsatz vom Gashahn zu demontieren.

Der Magnetanker des Magneteinsatzes kann vorteilhaft bis außerhalb des Gashahns verlängert sein. Der verlängerte Magnetanker ist präziser im Ankergehäuse führbar sowie spiel- und/oder reibungsärmer bewegbar. Der Verschleiß an Magnetanker-Führungsabschnitten im Ankergehäuse ist dadurch reduziert.

Das Ankergehäuse kann nach Art einer Zweipunktlagerung zumindest zwei voneinander axial beabstandete Magnetanker-Führungsabschnitte zur Führung des Magnetankers aufweisen. Dadurch ist die präzise und reibungsarme Bewegung des Ankers weiter verbessert. Besonders vorteilhaft für ein gutes Stellverhalten des Magnetankers ist es, wenn die beiden Führungsabschnitte aus unterschiedlichen Werkstoffen, insbesondere aus Metall und aus Kunststoff gebildet sind.

Bevorzugt für eine gute Stellbewegung des Magnetankers ist es, wenn der Abstand zwischen den beiden Führungsabschnitten möglichst groß ist. Dies kann erfindungsgemäß realisiert werden, wenn ein erster Magnetanker-Führungsabschnitt des Ankergehäuses innerhalb des Gashahns vorgesehen ist, und ein zweiter Magnetanker-Führungsabschnitt des Ankergehäuses außerhalb des Gashahns ausgebildet ist. Dadurch kann insbesondere in Kombination mit oben beschriebenen Merkmalen die Anzahl der Schaltzyklen des Magneteinsatzes auf mehr als 100.000 erhöht werden.

Zur Verstärkung einer Magnetkraft des Magneteinsatzes kann bevorzugt im Ankergehäuse ein ortsfester Gegenanker angeordnet sein. Der Gegenanker dient überdies der Begrenzung eines Ankerhubes.

Fertigungstechnisch bevorzugt ist es, wenn das Ankergehäuse zweiteilig aus einem im Gashahn eingesetzten ersten Ankergehäuseabschnitt und aus einem aus dem Gashahn ragenden zweiten Ankergehäuseabschnitt ausgebildet ist. Hierbei ist vorzugsweise der zweite Ankergehäuseabschnitt gasdicht mit dem Gashahn in Verbindung.

Fertigungstechnisch besonders bevorzugt ist es, wenn der im Gashahn angeordnete erste Ankergehäuseabschnitt des Magneteinsatzes baugleich mit entsprechenden Gehäuseabschnitten handelsüblicher Magneteinsätze ist. In diesem Fall ist der erfindungsgemäße Magneteinsatz bei schon serienmäßig hergestellten Gashähnen einsetzbar, ohne dass eine nachträgliche Anpassung der Gashähne vorzunehmen ist. Sämtliche Modifikationen des erfindungsgemäßen Magneteinsatzes sind dagegen am zweiten Ankergehäuseabschnitt außerhalb des Gashahn vorgesehen.

Nachfolgend sind zwei Ausführungsbeispiele der Erfindung anhand der beigefügten Figuren beschrieben. Es zeigen:
Figur 1 in perspektivischer Ansicht einen Gashahn mit einem elektromagnetischen Sicherheitsventil gemäß dem ersten Ausführungsbeispiel;
Figur 2 eine Schnittdarstellung des Gashahns aus der Figur 1 entlang einer durch die Linien I und II aus der Figur 1 aufgespannten Ebene;
Figur 3 eine Schnittdarstellung des Gashahns aus der Figur 1 entlang einer durch die Linien I und III aus der Figur 1 aufgespannten Ebene; und
Figur 4 in einer der Figur 3 entsprechenden Schnittdarstellung einen Gashahn gemäß dem zweiten Ausführungsbeispiel.

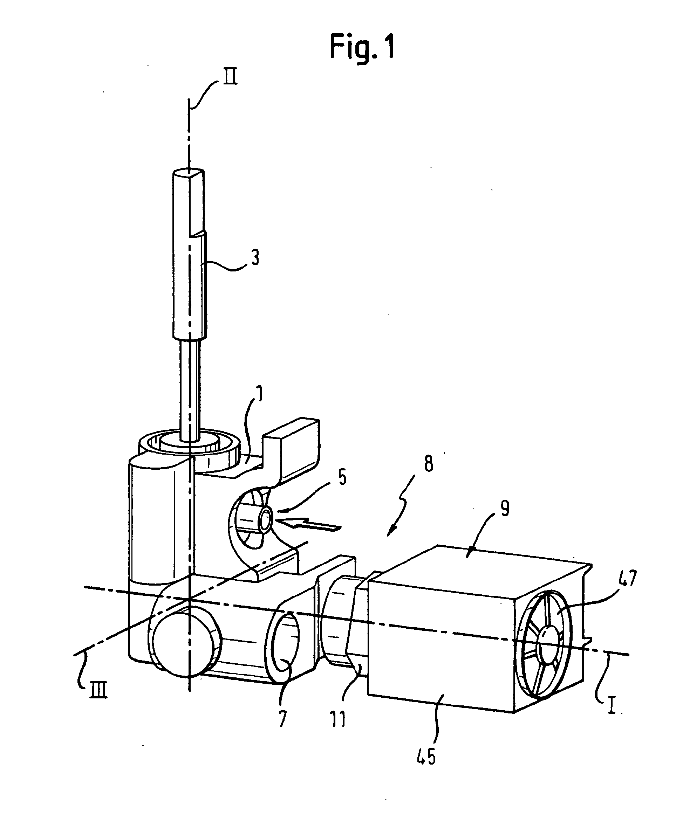

In der Figur 1 ist ein herkömmlicher Gashahn mit einem Gashahnkörper 1 dargestellt. Im Gashahnkörper 1 ist eine Hahnachse 3 drehbar gelagert. Zur Betätigung des Gashahns ist am oberen freien Ende der Hahnachse 3 ein nicht dargestellter Drehknebel angebracht. Ein Gaseingang 5 des Gashahnkörpers 1 kann mit einer nicht dargestellten Gaszuleitung verbunden werden. Der Gaseingang 5 ist über einen aus den folgenden Figuren ersichtlichen Gasweg 6 mit einem Gasausgang 7 strömungstechnisch in Verbindung. Eine Gasströmung im Gasweg 6 verläuft entlang der in den Figuren gezeigten Pfeile. Der in der Figur 1 gezeigte Gashahn weist ein Sicherheitsventil 8 mit einem Magneteinsatz 9 auf. Der Magneteinsatz 9 ist mittels einer Überwurfmutter 11 an dem Gashahnkörper 1 verschraubt.

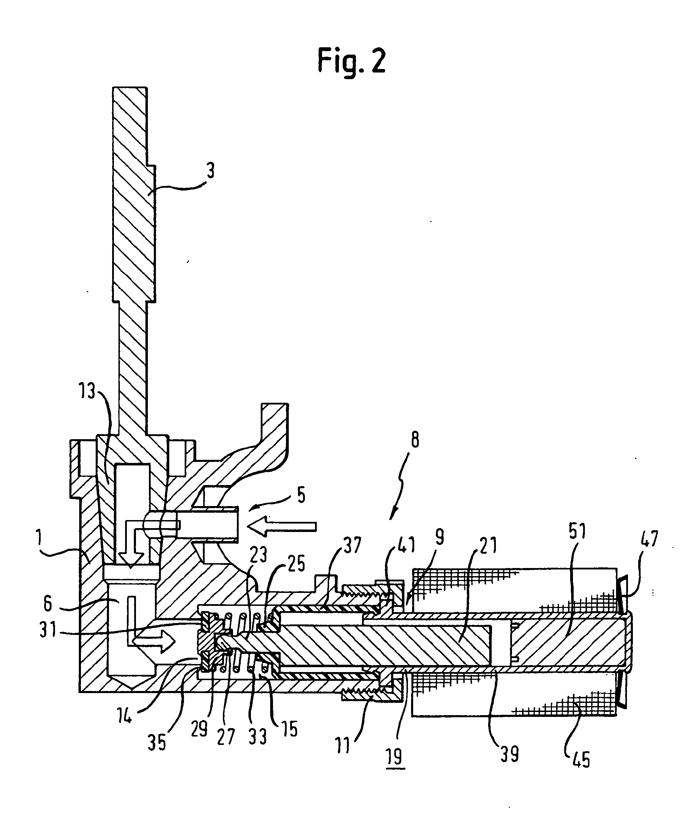

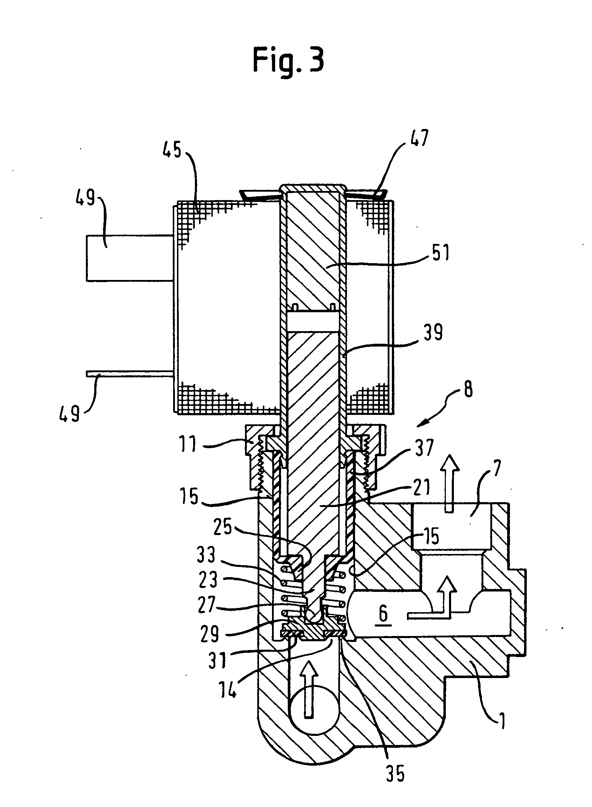

Gemäß der Figur 2 ist am unteren Ende der Hahnachse 3 ein Hahnküken 13 ausgebildet, das in einem Konusabschnitt des Gashahnkörpers 1 drehbar gelagert ist. In Abhängigkeit von der Drehstellung des Hahnkükens 13 wird der Gasdurchlass durch den Gasweg 6 eingestellt. Dieser mündet in eine stirnseitig Mündungsöffnung 14 einer horizontal verlaufende Aufnahmebohrung 15 des Gashahns. Der Gasweg 6 verläuft weiter durch eine Öffnung in der zylindrischen Innenwand der Aufnahmebohrung 15 zum Gasausgang 7. In der Aufnahmebohrung 15 ist der Magneteinsatz 9 eingesetzt. Der Magneteinsatz 9 weist ein Ankergehäuse 19 auf, in dem ein Magnetanker 21 geführt ist. Dem Magnetanker 21 ist ein Übertragungsstößel 23 angeformt. Dieser ragt entgegen der Gasströmungsrichtung durch einen hülsenförmigen Magnetanker-Führungsabschnitt 25 des Ankergehäuses 19. Das freie Ende des Übertragungsstößels 23 ist als ein Kugelkopf 27 geformt. Darauf ist als ein Ventilverschlusselement ein Ventilteller 29 mit einer Dichtung 31 befestigt. Der Ventilteller 29 ist gegenüber dem Kugelkopf 27 des Übertragungsstößel 23 etwas beweglich. Winkelfehler zwischen dem Magneteinsatz 9 und dem Gashahnkörper 1 werden dadurch ausgeglichen. Am Ankergehäuse 19 stützt sich eine Schraubenfeder 33 ab, die auf den Ventilteller 29 drückt. Dieser ist in der Figur 2 auf einen stirnseitig in der Aufnahmebohrung 15 ausgebildeten Ventilsitz 35 gedrückt, der die stirnseitige Mündungsöffnung 14 umgibt. Dadurch ist, wie auch aus der Figur 3 hervorgeht, der Gasweg 6 zwischen dem Gaseingang 5 und dem Gasausgang 7 verschlossen.

Den Figuren 2 und 3 ist zu entnehmen, dass das Ankergehäuse 19 zweiteilig aus einem kostengünstigen Kunststoffgehäuseteil 37 und einer Ankerführungshülse 39 aus Metall gefertigt ist. Das Kunststoffgehäuseteil 37 ist vollständig in der Aufnahmebohrung 15 des Gashahnkörpers 1 versenkt. Ein gegenüber dem hülsenförmigen Führungsabschnitt 25 liegendes offene Ende des Kunststoffgehäuseteils 37 ist auf einen Außenumfang der Ankerführungshülse 39 geschoben. Dabei überlappt das Kunststoffgehäuseteil 37 die Ankerführungshülse 39 bis zu einem Umfangflansch 41 der Ankerführungshülse 39. Der Umfangsflansch 41 der Ankerführungshülse 39 ist mittels der aufgeschraubten Überwurfmutter 43 gasdicht auf einen stirnseitigen Außenrand der Aufnahmebohrung gepresst. Der Innenumfang der Ankerführungshülse 39 ist in flächiger Anlage mit dem Magnetanker 21. Der Innenumfang der Ankerführungshülse 39 dient daher, wie auch der hülsenförmige Führungsabschnitt 25, als ein Magnetanker-Führungsabschnitt.

Auf dem Außenumfang der außerhalb des Gashahnkörpers 1 angeordneten Ankerführungshülse 39 ist eine Elektromagnetspule 45 gelagert. Zur Sicherung der Elektromagnetspule 45 auf der Ankerführungshülse 39 ist stirnseitig eine Rastscheibe 47 auf die Ankerführungshülse 39 geschoben. Die Rastscheibe 47 ist in einer Umfangsnut der Ankerführungshülse 39 verrastet. Die Elektromagnetspule 39 weist elektrische Anschlusskontakte 49 auf. Diese sind mit einem elektrischen Flammenüberwachungsglied, d.h. einem Thermoelement, oder mit einer elektronischen Steuerungseinrichtung zur vollautomatischen Steuerung des Sicherheitsventils 8 verbindbar. Bei Vorhandensein einer Gasflamme an einem Gasbrenner erzeugt das Thermoelement eine elektrische Spannung, die über die elektrischen Anschlusskontakte 49 der Elektromagnetspule 45 zugeführt wird und diese erregt. Dadurch wird eine entgegen einer Federkraft der Feder 33 eine Magnetkraft auf den Magnetanker 21 ausgeübt. Die Magnetkraft bringt den Magnetanker 21 in eine geöffnete Position, in der der Ventilteller 29 außer Anlage mit dem Ventilsitz 35 ist. Sollte die Flamme während des Betriebs erlöschen, bricht die Spannung und damit die Magnetkraft zusammen. Der Magnetanker 21 wird daher mittels der Federkraft der Feder 33 abermals gegen den Ventilsitz 35 gedrückt. Bei erloschener Flamme ist daher der Gasweg 6 im Gashahn verschlossen. Zur Steigerung der auf den Magnetanker 21 wirkenden Magnetkraft der Elektromagnetspule 45 ist in der Ankerführungshülse 39 ein Gegenanker 51 ortsfest angeordnet. Der Gegenanker 51 dient zugleich einer Begrenzung eines Öffnungshubweges des Magnetankers 21.

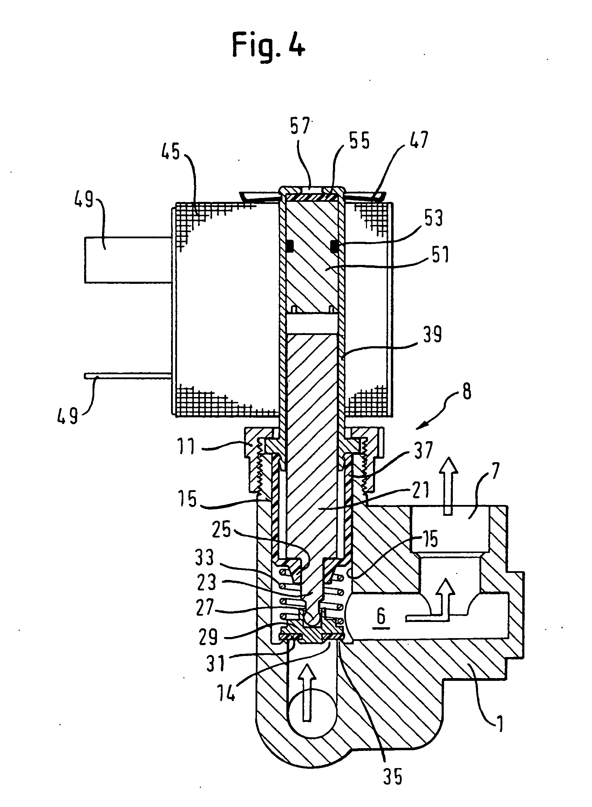

In der Figur 4 ist ein Magneteinsatz 9 gemäß dem zweiten Ausführungsbeispiel dargestellt. Aufbau und Funktionsweise des Magneteinsatzes 9 sind identisch mit dem Magneteinsatz 9 des ersten Ausführungsbeispiels mit der Ausnahme, dass im Magneteinsatz 9 aus der Figur 4 zusätzlich ein Dämpfungssystem zur Dämpfung von Schlagstößen des Magnetankers 21 auf den Gegenanker 51 vorgesehen ist. Das Dämpfungssystem weist einerseits einen im Außenumfang des Gegenankers 51 eingelassenen O-Ring 53 auf. Der O-Ring 53 ist zwischen dem Innenumfang der Ankerführungshülse 39 und dem Gegenanker 51 eingepresst und ermöglicht eine ortsfeste Halterung des Gegenankers 51. Zugleich ist das Ankergehäuse 19 nach außen gasdicht abgeschlossen. Zusätzlich ist zur Dämpfung der auf den Gegenanker 51 ausgeübten Stöße zwischen der oberen Stirnseite der Ankerführungshülse 39 und dem Gegenanker 51 eine Dämpfungsscheibe 55 aus Silikon-Material eingefügt. Die obere Stirnseite der Ankerführungshülse 39 kann - aufgrund der gasdichten Abdichtung durch den O-Ring 53 - mit einer fertigungstechnisch vorteilhaften Öffnung 57 ausgebildet werden, wie sie in der Figur 4 gezeigt ist.

## Patentansprüche

1. Gashahn mit einem elektromagnetischen Sicherheitsventil (8) zum Verschließen eines Gasweges (6) im Gashahn, welches Sicherheitsventil (8) einen im Gashahn eingesetzten Magneteinsatz (9) mit einem Ankergehäuse (19) aufweist, in dem ein beweglicher Magnetanker (21) mit einem Ventitverschlusselement (29) angeordnet ist, das zum Schließen des Gasweges (6) auf einen im Gashahn vorgesehenen Ventilsitz (35) drückt, welchem Magnetanker (21) eine Elektromagnatspule (45) zugeordnet ist, die beim Anlegen einer Spannung den Magnetanker (21) betätigt, wobei die Elektromagnetspule (45) als ein separates Bauteil außerhalb des Ankergehäuses (19) des Magneteinsatzes (9) angeordnet ist

2. Gashahn nach Anspruch 1, **dadurch gekennzeichnet, dass** die Elektromagnetspule (45) gasdicht vom Gasweg (6) im Gashahn abgetrennt angeordnet ist.

3. Gashahn nach Anspruch 1 oder 2, **dadurch gekennzeichnet, dass** die Elektromagnetspule (45) einfach demontierbar am Ankergehäuse (19) des Magneteinsatzes (9) angebracht ist

4. Gashahn nach einem der vorhergehenden Ansprüche, **dadurch gekennzeichnet, dass** die Elektromagnetspule (45) außerhalb des Gashahns angeordnet ist.

5. Gashahn nach einem der vorhergehenden Ansprüche, **dadurch gekennzeichnet, dass** der Magnetanker (21) des Magneteinsatzes (9) bis außerhalb des Gashahns ragt.

6. Gashahn nach einem der vorhergehenden Ansprüche, **dadurch gekennzeichnet, dass** im Ankergehäuse (19) zumindest zwei voneinander axial beabstandete Magnetanker-Führungsabschnitte (25, 39) zur Führung des Magnetankers (21) ausgebildet sind.

7. Gashahn nach Anspruch 6, **dadurch gekennzeichnet, dass** ein erster Magnetanker-Führungsabschnitt (25) des Ankergehäuses (19) innerhalb des Gashahns und ein zweiter Magnetanker-Führungsabschnitt (39) des Ankergehäuses (19) außerhalb des Gashahns ausgebildet ist.

8. Gashahn nach einem der Ansprüche 6 oder 7, **dadurch gekennzeichnet, dass** die zumindest zwei Magnetanker-Führungsabschnitte (25, 39) aus unterschiedlichen Werkstoffen, insbesondere aus Metall und aus Kunststoff gebildet sind.

9. Gashahn nach einem der vorhergehenden Ansprüche, **dadurch gekennzeichnet, dass** im Ankergehäuse (19) ein Gegenanker (51) zur Verstärkung einer Magnetkraft des Magneteinsatzes (9) und/oder zum Begrenzen eines Ankerhubweges angeordnet ist.

10. Gashahn nach einem der vorhergehenden Ansprüche, **dadurch gekennzeichnet, dass** das Ankergehäuse (19) zweiteilig aus einem im Gashahn eingesetzten ersten Ankergehäuseabschnitt (37) und einem aus dem Gashahn ragenden zweiten Ankergehäuseabschnitt (39) ausgebildet ist.

11. Gashahn nach Anspruch 10, **dadurch gekennzeichnet, dass** der im Gashahn eingesetzte erste Ankergehäuseabschnitt (37) des Magneteinsatzes (9) baugleich mit entsprechenden Gehäuseabschnitten handelsüblicher Magneteinsätze ist.

12. Gashahn nach einem der Ansprüche 10 oder 11, **dadurch gekennzeichnet, dass** an dem aus dem Gashahn ragenden zweiten Ankergehäuseabschnitt (39) die Elektromagnetspule (45), einer der Magnetanker-Führungsabschnitte und/oder der Gegenanker (51) vorgesehen sind.

## Claims

1. Gas cock with an electromagnetic safety valve (8) for closing a gas path (6) in the gas cock, which safety valve (8) comprises a magnet insert (8), which is inserted in the gas cock, with an armature housing (19) in which is arranged a movable magnet armature (21) with a valve closing element (29), which for closing the gas path (6) presses against a valve seat (35) provided in the gas cock, an electromagnet coil (45) being associated with the magnet armature (21) and actuated on application of a voltage to the magnet armature (21), wherein the electromagnetic coil (45) is arranged as a separate component outside the armature housing (19) of the magnet insert (9).

2. Gas cock according to claim 1, **characterised in that** the electromagnet coil (45) is arranged to be gas-tightly separated from the gas path (6) in the gas cock.

3. Gas cock according to claim 1 or 2, **characterised in that** the electromagnet coil (45) is mounted at the armature housing (19) of the magnet insert (9) to be easily demountable.

4. Gas cock according to any one of the preceding claims, **characterised in that** the electromagnet coil (45) is arranged outside the gas cock.

5. Gas cock according to any one of the preceding claims, **characterised in that** the magnet armature (21) of the magnet insert (9) projects outside the gas cock.

6. Gas cock according to any one of the preceding claims, **characterised in that** at least two magnet armature guide sections (25, 39), which are axially spaced from one another, for guidance of the magnet armature (21) are formed in the armature housing (19).

7. Gas cock according to claim 6, **characterised in that** a first magnet armature guide section (25) of the armature housing (19) is formed within the gas cock and a second magnet armature guide section (39) of the armature housing (19) is formed outside the gas cock.

8. Gas cock according to one of claims 6 and 7, **characterised in that** the at least two magnet armature guide sections (25, 39) are formed from different materials, particularly from metal and from plastics material.

9. Gas cock according to any one of the preceding claims, **characterised in that** a counter-armature (51) for amplification of a magnetic force of the magnet insert (9) and/or for limiting an armature stroke path is arranged in the armature housing (19).

10. Gas cock according to any one of the preceding claims, **characterised in that** the armature housing (19) is of two-part construction consisting of a first armature housing section (37) inserted in the gas cock and a second armature housing section (39) projecting out of the gas cock.

11. Gas cock according to claim 10, **characterised in that** the first armature housing section (37), which is inserted in the gas cock, of the magnet insert (19) is constructionally identical with corresponding housing sections of commercially available magnet inserts.

12. Gas cock according to one of claims 10 and 11, **characterised in that** the electromagnet coil (45), one of the magnet armature guide sections and/or the counter-armature (51) is or are provided at the second armature housing section (39) projecting out of the gas cock.

## Revendications

1. Robinet de gaz comprenant une vanne de sécurité électromagnétique (8) destinée à obturer une voie de gaz (6) dans le robinet de gaz, laquelle vanne de sécurité (8) présente un insert magnétique (9) inséré dans le robinet de gaz et muni d'un boîtier d'induit (19), dans lequel est disposée une armature d'aimant mobile (21) munie d'un élément d'obturation de vanne (29) qui, pour fermer la voie du gaz (6), appuie sur un siège de vanne (35) ménagé dans le robinet de gaz, à laquelle armature d'aimant (21) correspond une bobine électromagnétique (45) qui, lorsqu'une tension est appliquée, actionne l'armature d'aimant (21), la bobine électromagnétique (45) étant disposée à l'extérieur du boîtier d'induit (19) de l'insert magnétique (9) en tant qu'un composant séparé.

2. Robinet de gaz selon la revendication 1, **caractérisé en ce que** la bobine électromagnétique (45) est disposée de manière séparée de la voie du gaz (6) dans le robinet de gaz en étant étanche au gaz.

3. Robinet de gaz selon la revendication 1 ou 2, **caractérisé en ce que** la bobine électromagnétique (45) est installée sur le boîtier d'induit (19) de l'insert magnétique (9) de manière facilement démontable.

4. Robinet de gaz selon l'une quelconque des revendications précédentes, **caractérisé en ce que** la bobine électromagnétique (45) est disposée à l'extérieur du robinet de gaz.

5. Robinet de gaz selon l'une quelconque des revendications précédentes, **caractérisé en ce que** l'armature d'aimant (21) de l'insert magnétique (9) dépasse jusqu'à l'extérieur du robinet de gaz.

6. Robinet de gaz selon l'une quelconque des revendications précédentes, **caractérisé en ce qu'**au moins deux sections de guidage (25, 39) d'armature d'aimant, distancées axialement les unes des autres, destinées au guidage de l'armature d'aimant (21) sont réalisées dans le boîtier d'induit (19).

7. Robinet de gaz selon la revendication 6, **caractérisé en ce qu'**une première section de guidage (25) d'armature d'aimant du boîtier d'induit (19) est réalisée à l'intérieur du robinet de gaz et **en ce qu'**une seconde section de guidage (39) d'armature d'aimant du boîtier d'induit (19) est réalisée à l'extérieur du robinet de gaz.

8. Robinet de gaz selon la revendication 6 ou 7, **caractérisé en ce que** les au moins deux sections de guidage (25, 39) d'armature d'aimant sont réalisées dans des matières différentes, notamment en métal et en plastique.

9. Robinet de gaz selon l'une quelconque des revendications précédentes, **caractérisé en ce qu'**un contre-induit (51) destiné à renforcer une force magnétique de l'insert magnétique (9) et/ou à limiter un trajet de course de l'induit est disposé dans le boîtier d'induit (19).

10. Robinet de gaz selon l'une quelconque des revendications précédentes, **caractérisé en ce que** le boîtier d'induit (19) est réalisé en deux parties, à partir d'une première section (37) de boîtier d'induit insérée dans le robinet de gaz et d'une seconde section (39) de boîtier d'induit dépassant hors du robinet de gaz.

11. Robinet de gaz selon la revendication 10, **caractérisé en ce que** la première section (37) de boîtier d'induit, insérée dans le robinet de gaz, de l'insert magnétique (9) est de construction identique à des sections de boîtier correspondantes d'inserts magnétiques du commerce.

12. Robinet de gaz selon la revendication 10 ou 11, **caractérisé en ce que** la bobine électromagnétique (45), l'une des sections de guidage de l'armature d'aimant et/ou le contre-induit (51) sont ménagés sur la seconde section (39) de boîtier d'induit dépassant hors du robinet de gaz.
